(19) Europäisches Patentamt
European Patent Office
Office européen des brevets

(11) **EP 2 381 825 B1**

(12) **EUROPEAN PATENT SPECIFICATION**

(45) Date of publication and mention
of the grant of the patent:
**18.12.2013 Bulletin 2013/51**

(51) Int Cl.:
*A47J 31/60* *(2006.01)*   *B01D 61/08* *(2006.01)*
*B01D 63/08* *(2006.01)*

(21) Application number: **10722581.5**

(86) International application number:
**PCT/EP2010/002559**

(22) Date of filing: **27.04.2010**

(87) International publication number:
**WO 2011/003485 (13.01.2011 Gazette 2011/02)**

(54) **Espresso machine with integrated water purification system**

Espressomaschine mit integriertem Wasserreinigungssystem

Machine à espresso avec système de purification d'eau intégré

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.07.2009 EP 09164861**

(43) Date of publication of application:
**02.11.2011 Bulletin 2011/44**

(73) Proprietor: **Del Sante, Giovanna**
**20040 Busnago (IT)**

(72) Inventor: **Del Sante, Giovanna**
**20040 Busnago (IT)**

(74) Representative: **Serravalle, Marco**
**Serravalle SAS**
**Via Matteotti, 21/23**
**26854 Cornegliano Laudense (LO) (IT)**

(56) References cited:
**DE-A1- 19 756 479      US-A1- 2005 263 457**
**US-A1- 2006 032 796**

**Description**

. The present invention is directed to an espresso machine comprising a system, inside or outside the machine, for the treatment of water which does not require maintenance and is able to remove hardness but in the same time to reduce total salinity and reject organic matters, heavy metals, bacteria. Producing the perfect water for the coffee machines.

. It is well known that the use of tap water for coffee machine leads to a quick scaling of the machine, due to CaCO3, calcium carbonate scaling.

. Usually, coffee machine are coupled with a filter unit of ionexchange resins, placed independently outside the coffee machine. Two types of resins are used. Strong cationic resins which replace bivalent cations calcium and magnesium , present in the water with sodium cations. They are regenerated by NaCl and soften water to a very low degree of hardness.

. Weak cationic resins only remove calcium and magnesium of bicarbonate salts, and replace them with a proton, leaving in water all other cations and the hardness linked to free mineral acidity. This treatment reduces hardness in a more limited way and lowers the pH of water. These resins are difficult to regenerate and are therefore substituted once exhausted.

. However, both treatments only change hardness of water, without removing any other ion or heavy metals, organic substances and bacteria possibly present in water. Membrane units, such as disclosed in document DE 197 56 479 A1, provide better performance.

. The taste of coffee produced in a coffee machine is influenced by water. A cup of espresso is produced by passing hot water at around 90 °C at a pressure of about 9 bar through a bed of about 7 gram of finely powdered coffee. There are at least 13 variables which influence the quality of the espresso cup. Amongst them, quality of coffee, type of roasting, temperature and pressure of water, chemical composition of water.

. To obtain an excellent cup of espresso, it is essential not only to start with an excellent type of coffee and with the right temperature and pressure of water, but also to use water with proper chemical and physical characteristics:

- neutral pH
- low content of salts (below 250 ppm, preferably below 100 ppm);
- hardness below 9 °F (French degrees)

. In particular, it has been noted that hardness not only causes scaling of the machine, but also influences the extraction from coffee of emulsifiers and foaming substances which produce the proper foam on espresso. Consequently, it is highly desirable to have a coffee machine which produces coffee by using water with a well defined and stable quality.

. The present invention is directed to an espresso coffee machine which comprises a system for treatment of water. More specifically, the coffee machine according to the present invention is provided with a system for the purification of water based on membrane filtration, preferably an osmotic membrane, more preferably a nanofiltration membrane. The nanofiltration membranes are selective reverse osmosis membranes, in the sense that are able to remove selectively the bivalent ion, like calcium and magnesium and are less selective versus monovalent ion like sodium or nitrates. The purification system does not require any maintenance.

. The membrane is placed after the pump, already present inside the coffee machine, which feeds the boiler of the machine. The pump provides the flow through the membrane, which flow is proportional to the pressure imposed by the pump and to the surface of the membrane. It is therefore possible to have the desired flow by selecting the proper pump and membrane size.

. The type of membrane to be used in the system of the present invention can be nanofiltration and reverse osmosis membranes. However, the preferred type of membranes are nanofiltration membranes. In fact, by using nanofiltration membranes it is possible to combine a very limited volume of the system, which allows introduction of the purification system also in small machines for family use, and an excellent and stable quality of water.

. The use of reverse osmosis membranes is possible but requires much larger volumes and is therefore only possible in large machines for commercial locations (bars, restaurants etc.).

. The purification system according to the invention is capable of feeding the boiler of the coffee machine with water having hardness lower than 9 °F, preferably lower than 5 °F, most preferably comprised between 2 and 4 °F, and pH comprised between 6.0 and 8.0.

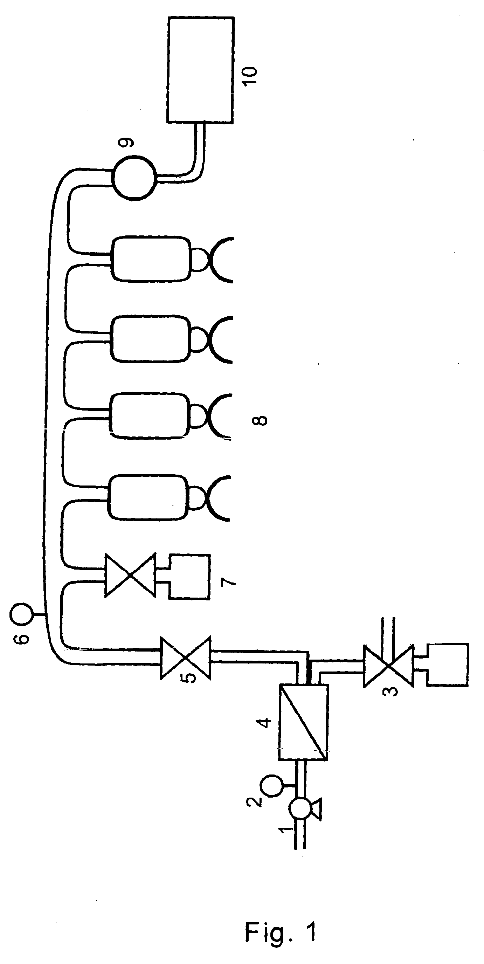

. A preferred embodiment of the invention is described in Fig. 1. (1) represents a pump which feeds the membrane filtration (4). (2) and (6) are manometers. (3) is a limiting valve set at 1.5 MPa and (7) is a limiting valve set at 0.9 MPa. (5) is a non-return valve. (8) are groups for the production of coffee and (10) is the water boiler of the coffee machine. In case of a large machine, the boiler is filled in each day in the morning when the machine is turned on. In this case, it is usually required that the boiler is filled quickly and, consequently, a large flux through the membrane is requested. Water in the boiler is kept at temperature of about 90 °C at a pressure of about 0.9 MPa, to be able to produce coffee under the best conditions. When the level of water is below a fixed value, the pump (1) is activated and the boiler filled in.

. The pump used in the espresso coffee machine of the present invention depends on the type and size of the membrane used. In fact, the flow is proportional to the pressure through the membrane, the surface of the membrane through a constant K characteristic of the membrane.

$$Q = K \times S_m \times (\Delta P - \Delta \pi)$$

Wherein Q is the flux in l/h $S_m$ is the surface of the membrane in $m^2$ and $\Delta P$ is the transmembrane pressure differential in Pa and An is the osmotic pressure differential in Pa.

. Consequently, a suitable pump for use in the present invention preferably produces a pressure head comprised between 0.3 and 2.5 MPa, preferably between 0.9 and 2 MPa.

. The water obtained by nanofiltration is characterized by very low hardness (2-4 °F) and neutral pH; furthermore, nanofiltration also guaranties microbiological purity of water. Another advantage of the system according to the invention is that it does not require maintenance and can work without problems for several years.

. In a preferred embodiment of the invention, the nanofiltration membranes are selected, basically but not only, from the following membranes NF 2521, NF 2514, NF 3010, NF 3011, NF 3012, NF 4012, NF 4014 which are produced by Oltremare srl.

. Preferably, the filtration system used in the present invention is capable of reducing the concentration of the monovalent ions of at least 50 %, more preferably of at least 60%, most preferably of at least 65%. Bivalent ions are preferably reduced of at least 60 %, more preferably of at least 70 %, most preferably of at least 80 %.

. The performance of a nanofiltration process depends not only on the type of membrane used, but also on the ratio retentate/permeate, wherein permeate is the mass of liquid which passes through the membrane and permeate is the mass of liquid which does not pass through the membrane and is discarded. While the amount of permeate is directly related to $\Delta P$, the retentate depends on the flux generated by the pump. For a given pressure head, the retentate will increase when increasing the flux imposed by the pump.

. It is evident that an increase in the ratio retentate/permeate will improve the efficiency of the nanofiltration. The ratio retentate/permeate will vary between 0.1 and 10, preferably between 0.2 and 5, more preferably between 0.3 and 2.

**Claims**

1. Espresso machine comprising a system, inside or outside the coffee machine, for the purification of water based on a membrane, directly fed by the pump of the coffee machine, wherein the ratio retentate/permeate varies between 0.1 and 10.

2. Espresso machine according to claim 1 wherein the system is based on nanofiltration or reverse osmosis.

3. Espresso machine according to claim 1 wherein the system is based basically but not only on nanofiltration, selective reverse osmosis membrane.

4. Espresso machine according to claims 1-3 wherein the water flow through the membrane is comprised between 5 l/h and 1000 l/min, preferably between 20 l/h and 500 l/h.

**Patentansprüche**

1. Espressomaschine enthaltend ein System, innerhalb oder außerhalb der Kaffeemaschine, für die Reinigung von Wasser basierend auf einer Membran, direkt gespeist durch die Pumpe der Kaffeemaschine, worin das Verhältnis Retentat/Permeat zwischen 0,1 und 10 variiert.

2. Espressomaschine gemäß Anspruch 1, worin das System auf Nanofiltration oder Umkehrosmose basiert.

3. Espressomaschine gemäß Anspruch 1, worin das System im Wesentlichen aber nicht nur auf Nanofiltrations-, selektiver Umkehrosmose-Membran beruht.

4. Espressomaschine gemäß Ansprüchen 1-3, worin der Wasserfluss durch die Membran zwischen 5 l/h und 1000 l/min, vorzugsweise zwischen 20 l/h und 500 l/h, liegt.

**Revendications**

1. Machine à expresso comprenant un système, à l'intérieur ou à l'extérieur de la machine à café, pour la purification de l'eau sur la base d'une membrane, directement alimenté par la pompe de la machine à café, le rapport rétentat/perméat variant entre 0,1 et 10.

2. Machine à expresso selon la revendication 1, dans laquelle le système est basé sur une nanofiltration ou une osmose inverse.

3. Machine à expresso selon la revendication 1, dans laquelle le système est basé essentiellement, mais non uniquement, sur une membrane d'osmose inverse sélective, de nanofiltration.

4. Machine à expresso selon l'une des revendications 1 à 3, dans laquelle le débit d'eau à travers la membrane est compris entre 5 l/h et 1000 l/min, de préférence entre 20 l/h et 500 l/h.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19756479 A1